(19) **Europäisches Patentamt / European Patent Office / Office européen des brevets**

(11) **EP 1 922 567 B1**

(12) **EUROPEAN PATENT SPECIFICATION**

(45) Date of publication and mention of the grant of the patent:
**25.08.2010 Bulletin 2010/34**

(21) Application number: **06787138.4**

(22) Date of filing: **11.07.2006**

(51) Int Cl.:
*G01V 3/38* (2006.01)    *G01V 3/12* (2006.01)

(86) International application number:
**PCT/US2006/027192**

(87) International publication number:
**WO 2007/018949 (15.02.2007 Gazette 2007/07)**

(54) **METHOD FOR WAVELET DENOISING OF CONTROLLED SOURCE ELECTROMAGNETIC SURVEY DATA**

VERFAHREN ZUR WAVELET-ENTRAUSCHUNG VON ELEKTROMAGNETISCHEN VERMESSUNGSDATEN GESTEUERTER QUELLEN

PROCÉDÉ DE DÉBRUITAGE PAR ONDELETTES DE DONNÉES DE RELEVÉ ÉLECTROMAGNÉTIQUE À SOURCE CONTRÔLÉE

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.07.2005 US 703203 P**

(43) Date of publication of application:
**21.05.2008 Bulletin 2008/21**

(73) Proprietor: **ExxonMobil Upstream Research Company**
**Houston, TX 77252-2189 (US)**

(72) Inventor: **WILLEN, Dennis, E.**
**Houston, TX 77090 (US)**

(74) Representative: **Pols, Ronald Maarten et al**
**ExxonMobil Chemical Europe Inc.**
**Law Technology**
**P.O. Box 105**
**1830 Machelen (BE)**

(56) References cited:
**EP-A- 1 170 698      WO-A-02/095449**
**US-A- 5 237 538      US-A- 5 287 328**
**US-A- 5 619 998      US-A- 5 673 191**
**US-A- 5 740 036      US-A- 5 740 036**
**US-A- 5 963 507**

• **LEBLANC AND MORRIS: "Denoising of aeromagnetic data via the wavelet transform" Geophysics Soc. Exploration Geophysicists USA, vol. 66, no. 6, December 2001 (2001-12), pages 1793-1804, XP002389360 ISSN: 0016-8033**

**Description**

This application claims the benefit of U. S. Provisional Application No. 60/703,203 filed on July 28, 2005.

**FIELD OF THE INVENTION**

This invention relates generally to the field of geophysical prospecting, and more particularly to controlled source electromagnetic ("CSEM") prospecting including field delineation. Specifically, the invention is a data processing method for reducing noise in CSEM survey results.

**BACKGROUND OF THE INVENTION**

Controlled-source electromagnetic surveys are an important geophysical tool for evaluating the presence of hydrocarbon-bearing strata within the earth. CSEM surveys typically record the electromagnetic signal induced in the earth by a source (transmitter) and measured at one or more receivers. The behavior of this signal as a function of transmitter location, frequency, and separation (offset) between transmitter and receiver can be diagnostic of rock properties associated with the presence or absence of hydrocarbons. Specifically, CSEM measurements are used to determine the spatially-varying resistivity of the subsurface.

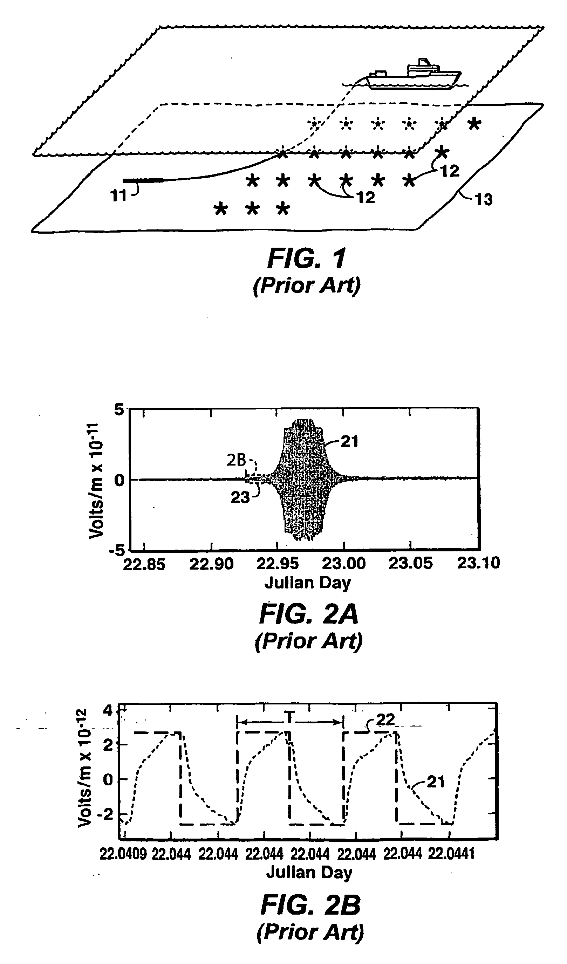

In the marine environment, CSEM data are typically acquired by towing an electric dipole transmitting antenna **11** among a number of receivers **12** positioned on the seafloor **13** (Figure 1). The transmitter antenna is typically towed a few tens of meters above the seafloor. The receivers have multiple sensors designed to record one or more different vector components of the electric and/or magnetic fields. Alternative configurations include stationary transmitters on the seafloor or in the water column as well as magnetic transmitter antennae. The transmitting and receiving systems typically operate independently (without any connection), so that receiver data must be synchronized with shipboard measurements of transmitter position by comparing clock times on the receivers to time from a shipboard or GPS (Global Positioning System) standard.

CSEM data are typically interpreted in the temporal frequency domain, each signal representing the response of the earth to electromagnetic energy at that temporal frequency. In raw data, the strength of each frequency component varies depending on how much energy the transmitter broadcasts and on the receiver sensitivity at that frequency. These effects are typically removed from the data prior to interpretation. Figures 2A and 2B depict raw receiver data **21** together with (in Fig. 2B) the transmitter waveform **22** that gave rise to it. Figure 2A shows examples of received CSEM signals on a time scale of several hours, while Fig. 2B shows the same received signal on a much shorter time scale **23,** comparable to the period, T, of the transmitter waveform. Typical values for T are between 4 and 64 seconds. The transmitter waveform is depicted as a dashed line overlaying the receiver waveform. (The transmitter waveform is shown for reference only: the vertical scale applies only to the receiver signal.)

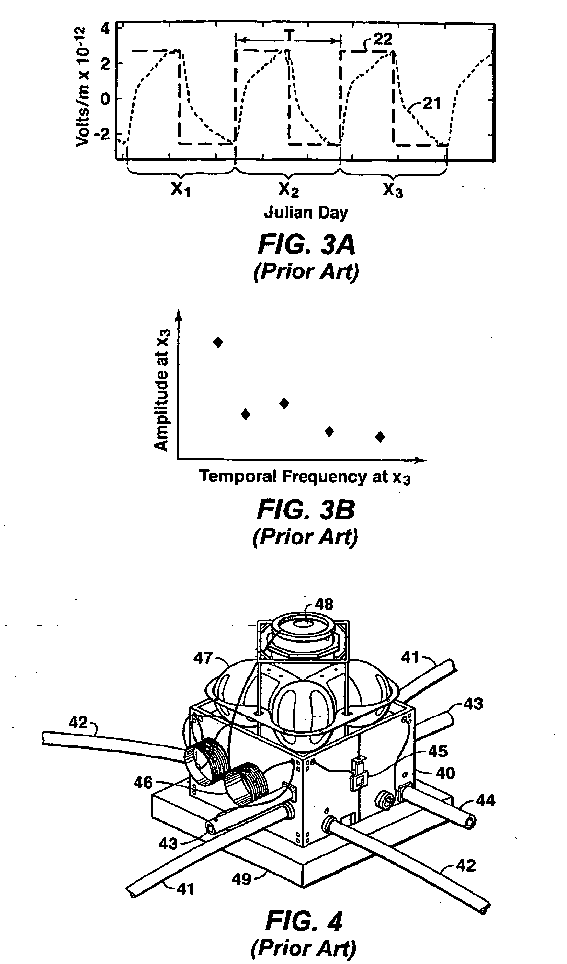

In practice, the receiver data are converted to temporal frequency by dividing (or "binning") the recorded time-domain data into time intervals equal to the transmitter waveform period (Fig. 3A) and determining the spectrum (Fig. 3B) within each bin ($x_1$, $x_2$, $x_3$) by standard methods based on the Fourier Transform. The phases of the spectral components are not shown. With each bin is associated a time, typically the Julian date at the center of the bin. Since the transmitter location is known as a function of time, these bins may be interchangeably labeled in several different ways including: by Julian date of the bin center; by transmitter position; by the signed offset distance between source and receiver; or by the cumulative distance traveled by the transmitter relative to some starting point.

In general, the received signals are made up of components both in-phase and out-of-phase with the transmitter signal. The signals are therefore conveniently represented as complex numbers in either rectangular (real-imaginary) or polar (amplitude-phase) form.

The transmitter signal may be a more complex waveform than that depicted in Figs. 2B and 3A.

CSEM receivers (Figure 4) typically include:

- a power system, e.g. batteries (inside data logger and pressure case **40**);

- one or more electric-field (E) or magnetic-field (B) antennae (dipoles **41** receive + and - $E_x$ fields, dipoles **42** + and - $E_y$, coils **43** for $B_x$ and coils **44** for $B_y$);

- other measuring devices, such as a compass and thermometer (not shown);

- electronics packages that begin sensing, digitizing, and storing these measurements at a pre-progratnmed time (inside case **40**);

- a means to extract data from the receiver to a shipboard computer after the receiver returns to the surface (not shown);

- a weight (e.g., concrete anchor **49**) sufficient to cause the receiver to fall to the seafloor;

- a mechanism **45** to release the receiver from its weight up receiving (acoustic release and navigation unit **46**) an acoustic signal from a surface vessel (**14** in Fig. 1);

- glass flotation spheres **47;**

- strayline float **48;** and

- various (not shown) hooks, flags, strobe lights, and radio beacons to simplify deployment and recovery of the receiver from a ship at the surface.

Clearly, other configurations are possible, such as connecting several receivers in a towed array (see, for example, U. S. Patent No. 4,617,518 to Srnka). The receiver depicted in Fig. 4 is a 4-component ($E_x$, $E_y$, $B_x$, and $B_y$) seafloor CSEM receiver. The devices can be configured to record different field types, including vertical electric ($E_z$) and magnetic ($B_z$) fields.

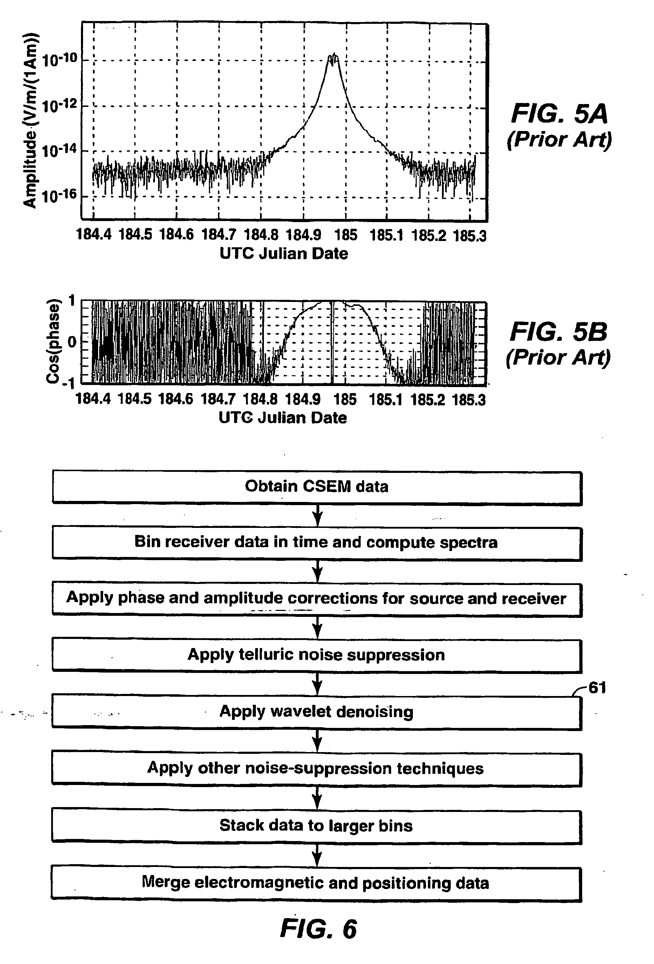

The magnitude of the measured electric field falls off rapidly with increasing source-receiver offset (Figure 5). When the offset is large enough, the earth's response to the transmitted signal will be weak and the measured signal will be corrupted by noise. Noise is a limiting factor in applying CSEM surveys to hydrocarbon exploration because it obscures the response from subtle earth structures, interferes with the use of data from multiple receivers, and restricts the range of temporal frequencies that can be used.

Figures 5A-B are plots of electric-field data from an actual CSEM survey showing high (spatial) frequency noise when the transmitter is far away from the receiver. The curves are the magnitude (Fig. 5A) and phase (Fig. 5B) of the electric field normalized by the transmitter strength. The transmitter traveled about 58 km during the 0.9 days covered by the horizontal axis. The transmitter approaches the receiver from the left, passes nearest to the receiver at about day 184.95, and recedes from the receiver to the right. The transmitter was closest to the receiver just after day 184.95. Each data point represents the electric field amplitude at 0.0625 Hz. computed from a 64-second bin which is equivalent to about 48 meters of transmitter travel for this survey. The large signal fluctuations before day 184.85 and after day 185.05 cannot be physically attributed to variations in the subsurface resistivity, which is unchanging over such short time intervals. These fluctuations can only be noise.

While some types of noise can be overcome by increasing transmitter strength or slowing the speed of the survey vessel, both approaches are costly. It is therefore advantageous to use computer-based signal processing techniques to mitigate noise in CSEM data.

When the origin of the noise is known precisely, it can sometimes be removed by explicit modeling and subtraction, as PCT Patent Publication No. WO/2005/010560 filed with priority date of June 26, 2003 discloses for the case of air-wave noise. In other cases, where the origin of the noise is less well understood or where it may originate in more than one phenomenon, suppression methods can be based on how the noise presents itself in the data. For example, PCT Patent Application No. PCT/US06/01555 filed with priority date of February 18, 2005, describes a method where noise is estimated from signals measured at frequencies that were not transmitted by the source.

The present invention suppresses noise in CSEM data based on the joint spatial and spatial frequency content of the noise. The term spatial frequency refers to the frequency variable introduced by Fourier transforming a spatially varying signal. The noise in Figs. 5A-B can be mitigated by the present invention.

The relatively flat response in Figs. 5A-B between about days 184.96 and 184.98 is called the "saturation zone". During this time interval, the transmitter was close enough to the receiver to overwhelm the dynamic range of the receiver's recording electronics.

The decomposition to temporal frequency is itself a noise-rejection method since it suppresses those portions of the signal that do not correspond to frequencies that were broadcast by the transmitter.

A direct approach to mitigating spatially-varying noise is to "stack" the data by combining several adjacent time bins into a single, larger bin. See, for example, L. M. MacGregor et al., "The RAMESSES experiment -III. Controlled-source electromagnetic sounding of the Reykjanes Ridge at 57°45' N," Geophys. J. Int. 135, 773-789 (1998). The use of weighted stacks has been discussed by Macnae, et al. for time-domain surveys (Geophysics, 49, 934-948, (1984)).

Spies estimates the noise on one component of the magnetic field from measurements on the other two components. (Geophysics 53, 1068-1079, (1988)).

Spatial filters have been applied to reduce noise in aeromagnetic data, which are airborne measurements of the naturally occurring, static (zero-frequency) magnetic field of the earth. See, for example, B. K. Bhattacharyya, "Design of spatial filters and their application to high-resolution aeromagnetic data," Geophysics 37, 68-91 (1972).

Wavelet denoising has been applied to various types of non-CSEM data (J. S. Walker, A Primer on Wavelets and their Scientific Applications, Chapman & Hall/CRC (1999)). U.S. Patent No. 5,619,998 to Abdel-Malek and Rigby discloses reducing signal-dependent noise in a coherent imaging system signal (such as in medical ultrasound imaging) by filtering speckle noise using nonlinear adaptive thresholding of received echo wavelet transform coefficients. U.S. Patent No. 6,741,739 to Vincent discloses a method for improving signal to noise ratio of an information carrying signal wherein a wavelet transform up to a predetermined level is computed, a frequency thresholded signal which is indicative of noise is derived from the wavelet transform, and the frequency thresholded signal is subtracted from the information carrying signal. Within the geophysical literature, wavelet denoising has been applied to aeromagnetic data (Leblanc and Morris, "Denoising of aeromagnetic data via the wavelet transform," Geophysics 66, 1793-1804, (2001); Ridsdill-Smith and Dentith, "The wavelet transform in aeromagnetic processing," Geophysics 64, 1003-1013 (1999); and Ridsdill-Smith, The Application of the Wavelet Transform to the Processing of Aeromagnetic Data, Ph. D. thesis, The University of Western Australia (2000)); to gravity data (J. C. Soares, et al., "Efficient automatic denoising of gravity gradiometry data," Geophysics 69, 772-782 (2004)); and to seismic data (Zhang and Ulrych, "Physical Wavelet Frame Denoising," Geophysics 68, 225-231 (2003)).

The behavior and origin of noise in marine CSEM surveys can vary significantly from place-to-place in the earth and with changes in ocean currents and atmopheric conditions. Moreover, the noises in any particular CSEM data set may stem from more than one source and exhibit more than one type of behavior. It is therefore an advantage when a noise suppression technique can be applied together with other noise-rejection techniques, such as decomposition to temporal frequency and stacking.

Stacking as a noise suppression technique is a statistical process that is most effective when the noise has a Gaussian distribution about some mean value. In marine CSEM data, noise can have very large excursions from its mean value. As a result, larger stacking bins will tend to be dominated by a few of the largest noise spikes and can fail to represent the underlying signal. In addition, large stacking bins decrease the spatial resolution of the data, since it becomes unclear how large bins should be associated with a specific time or offset. Spatial resolution is important since the user of CSEM data is attempting to determine both the resistive nature and position of strata in the subsurface.

On land, noise-suppression methods are based on working with the data in the time domain and typically deal only with data acquired during periods when the transmitter current is off. This strategy is crucial for land data since it provides a way of rejecting the very large signal that reaches the receiver through air (the "air wave"). In the marine setting, the air-wave is often suppressed by ohmic losses in the water. In addition, by keeping the transmitter mostly in an "on" state, marine surveys can operate at increased signal levels and spread more energy out among different temporal frequencies to better resolve the earth's structure in depth. US 5,740,036 discloses a method and apparatus for analyzing geological data using wavelet analysis.

## <u>SUMMARY OF THE INVENTION</u>

According to the invention, there is provided a computer implemented method for reducing high frequency, offset dependent noise mixed with a true signal in a signal recorded by a receiver in a controlled source electromagnetic survey of an offshore subterranean region, comprising: (a) selecting a wavelet function satisfying conditions of compact support and zero mean; (b) transforming said recorded signal with a wavelet transformation using said wavelet function, thereby generating a decomposed signal consisting of a high frequency component (the detail coefficients) and a low frequency component (the approximation coefficients); (c) reducing the magnitude of the high frequency component where such magnitude exceeds a pre-selected threshold value, thereby completing a first level of decomposition; and (d) inverse transforming the low-frequency component plus the threshold-reduced high-frequency component, thereby reconstructing a noise-filtered signal.

In other embodiments, more than one level of decomposition is performed before reconstructing the last set of approximation coefficients combined with any detail coefficients remaining from previous decompositions after thresholding. In other words, after step (c) above, one (i) selects the low-frequency component from the previous level of decomposition and transforms it with a wavelet transform into a high frequency component and a low frequency component; (ii) reduces the magnitude of the resulting high frequency component where such magnitude exceeds a pre-selected threshold value; (iii) accumulates the threshold-reduced high-frequency component from the previous step with the threshold-reduced high-frequency components from previous levels of decomposition; and (iv) repeats steps (i)-(iii) until a pre-selected level of decomposition has been performed, resulting in a final low-frequency component and a final high-frequency component consisting of the accumulated threshold-reduced high-frequency components from all levels of decomposition. In some, but not all, embodiments of the invention, the threshold for every level of decomposition is set to zero, meaning that all detail coefficients are zeroed.

**BRIEF DESCRIPTION OF THE DRAWINGS**

The present invention and its advantages will be better understood by referring to the following detailed description and the attached drawings in which:

Fig. 1 illustrates deployment of equipment for a typical CSEM survey;

Figs. 2A and 2B depict a received CSEM signal and the transmitter waveform that gave rise to it as functions of time;

Figs. 3A and 3B illustrate the process of binning a receiver signal in time and determining the frequency spectrum within each time bin by Fourier analysis;

Fig. 4 depicts a 4-component ($E_x$, $E_y$, $B_x$ and $B_y$ seafloor CSEM receiver;

Figs. 5A and 5B present electric field data from a CSEM survey showing high frequency noise when the transmitter is far from the receiver;

Fig. 6 is a flowchart showing one possible place where the present invention may be performed in a typical series of CSEM data processing steps;

Fig. 7 is a flowchart showing basic steps in one embodiment of the present inventive method;

Figs. 8A-P illustrate three-level decomposition of the data in Fig. 5 by the present inventive method;

Figs. 9A-B show the data of Fig. 5 after denoising by the present inventive method based on three-level wavelet decomposition;

Figs. 10A and 10B show the data of Fig. 5 after denoising by the present inventive method based on six-level wavelet decomposition; and

Figs. 11A-F show synthetic CSEM data with additive noise before and after wavelet denoising based on a four-level decomposition using 4th order symlets and using the Haar wavelet.

The invention will be described in connection with its preferred embodiments. However, to the extent that the following detailed description is specific to a particular embodiment or a particular use of the invention, this is intended to be illustrative only, and is not to be construed as limiting the scope of the invention. On the contrary, it is intended to cover all alternatives, modifications and equivalents that may be included within the scope of the invention, as defined by the appended claims.

**DETAILED DESCRIPTION OF PREFERRED EMBODIMENTS**

The present invention is a methods for performing wavelet denoising to remove portions of CSEM data that (1) vary too rapidly in offset to be a legitimate response of the earth to the transmitted signal and (2) show persistent high-frequency behavior over a range of offsets. It encompasses various ways of performing wavelet decomposition and denoising so that the CSEM data processor may select the implementation that is most effective on a particular data set by contrasting the effectiveness of alternative embodiments of the invention.

Figure 6 shows where the present inventive method (step **61**) might be inserted into a generalized, typical processing flow for CSEM data. Those skilled in the art of CSEM data processing will recognize that the steps within a processing flow are always selected to meet the needs of a particular survey or data set and that those steps may be sequenced differently or different steps performed than shown in Figure 6. This is particularly true in the case of the present invention, which requires only that wavelet denoising be performed at some (at least one) point during the data processing. Other common processing steps, such as receiver orientation analysis and inversion, are not shown.

In a preferred embodiment of the present invention, noise is removed by performing a discrete wavelet transform of the data, zeroing (or otherwise suppressing) small values (because they probably represent noise) among the wavelet detail coefficients ("thresholding"), and performing an inverse wavelet transform of the thresholded data. This method, which may be called "wavelet-denoising", can suppress the broad, high-spatial frequency noise appearing at far offsets without damaging the localized, steeply-sloping signals near the saturation zone. Terminology such as "detail coefficients" and "approximation coefficients" is commonly used in connection with the widely known technique of wavelet transforms, and may even be found in the user documentation for a commercial software product that can perform wavelet transforms of complicated input information by numerical methods - for example the product called MATLAB marketed by The Math Works, Inc. See also the product SAS from SAS Institute, Inc., the product Mathematica by Wolfram Research, Inc. and Press, et al., *Numerical Recipes in Fortran,* Cambridge University Press, 2nd Ed. (1992). The terms "scaling" or "smooth" are sometimes used in place of "approximation," and "wavelet" may be found in place of "detail." Use of wavelet transforms has been disclosed in many non-CSEM applications.

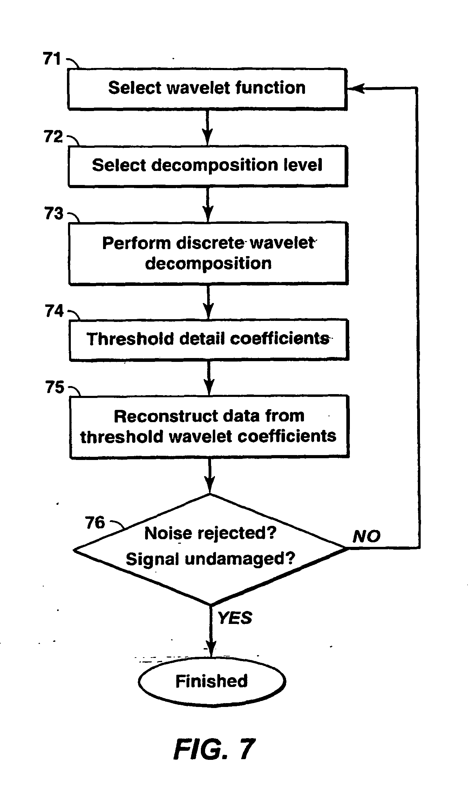

Figure 7 is a flowchart of basic steps of the present invention's method for wavelet denoising. The criteria of rejecting noise and leaving signal undamaged can be evaluated by visual inspection of the data. Alternatively, the effectiveness of the wavelet parameter choices could be evaluated by the degree to which the filtered data can be matched to synthetic data generated by a realistic resistivity model of the earth. The best choice of wavelets, decomposition level, and thresholding technique are all data-dependent. However, the wavelet and thresholding method can usually be chosen from a broad range of acceptable values while the decomposition level must be chosen more carefully by examining its impact on the data.

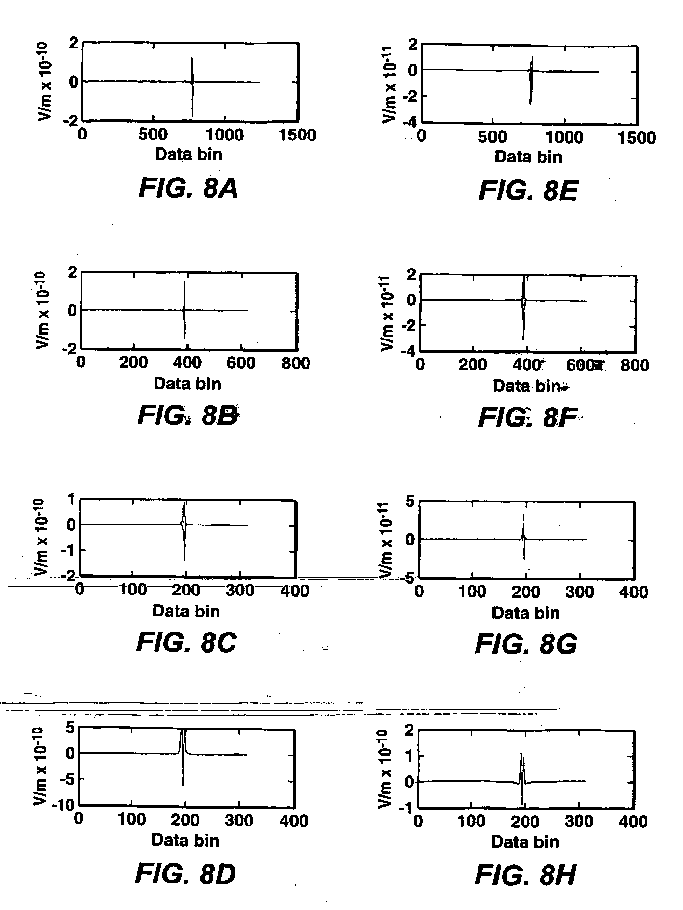

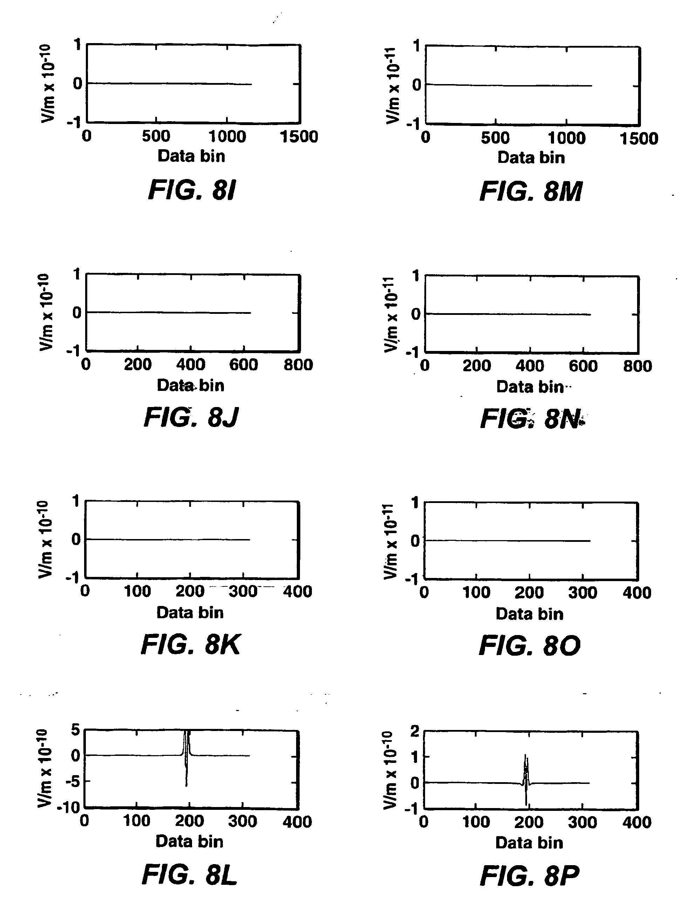

**Wavelet denoising** - Step **73**, the discrete wavelet transform (see, for example, S. Mallat, "A theory for multiresolution signal decomposition: The wavelet representation," IEEE Pattern Analysis and Machine Intelligence 11, 674-693 (1989)) recursively divides signals into high- and low-frequency components. The high-frequency components of the signal in Fig. 5 (the "detail" coefficients) are plotted in Figs. 8A (real, or in-phase, component) and 8E (imaginary, or quadrature, component). The low-frequency components (the "approximation" coefficients), which are not shown in the drawings for any of the decomposition levels except the last, were themselves decomposed into detail and approximation coefficients and the detail coefficients at this second level are shown in Figs. 8B and 8F. The decomposition into detail and approximation coefficients was carried out one more time and the detail coefficients plotted in Figs. 8C and 8G. The approximation coefficients at the third and final level are shown in Figs. 8D and 8H. This corresponds to selecting a decomposition level of three in step **72** of Fig. 7.

Figs. 8I-P show the three sets of detail coefficients and the approximation coefficients of the data after wavelet denoising. The detail coefficients after wavelet denoising, i.e., Figs. 8I-K and Figs. 8M-O, were obtained by zeroing small values (step **74**) among the detail coefficients in Figs. 8A-C and 8E-G, a step called thresholding. In this case, all detail coefficients were less than the selected threshold and hence were zeroed.

Time is the variable being represented on the horizontal axis of Figs. 8A-P. The decomposition of data such as that of Figs. 5A-B must necessarily be performed by numerical methods , meaning that the time scale must be subdivided into small but discrete intervals, a process called discretization. Figures 8A-H show the results of wavelet transforming a portion of the signal data of Figs. 5A-B, in particular the portion between 184.4 and 185.3 Julian Date. For example, 1200 discrete points are generated and plotted to produce the particular decomposition represented by Figs. 8A and 8E. The 1200 values plotted in Fig. 8A constitute the detail coefficients for the first level of wavelet decomposition of the real part of the recorded signal. The spikes at about abscissa value 720 represent relatively significant detail coefficients. Plotted points for the other intervals are barely discernable with the vertical scale used in the drawing. The thresholding decision that produced Fig. 8I was to zero every one of the 1200 detail coefficients in Fig. 8A, including the larger values at $\approx 720$. The approximation coefficients corresponding to Fig. 8A are not shown, nor are they shown at the second level of decomposition, but they are shown for the third and last level of decomposition in Fig. 8D. However, a second wavelet transform was applied to the approximation coefficients resulting from the first decomposition to generate the detail coefficients of Fig. 8B and corresponding (not shown) approximation coefficients. The process was continued in similar fashion to generate the approximation coefficients of Fig. 8D. This decomposed signal would then be inverse transformed back to the original domain and would constitute the real part of the final denoised signal if the election (at step **76**) were that three levels of decomposition and the thresholding election in Figs. 8I-K were optimum for this particular application. The MATLAB product separately outputs detail coefficients and approximation coefficients at each level of decomposition elected by the user. The user also has thresholding options to select (step **72**) from.

The details of the high-pass and low-pass filters used in the wavelet decomposition step **73** of the present invention are governed by the choice of wavelet function in step **71.** In a preferred embodiment of the present invention, the discrete wavelet decomposition is carried out by the fast wavelet transform (Mallat, 1989, op. cit.), which is available in MATLAB.

Thus, the wavelet transformation divides its input into low- and high-frequency components at progressively coarser scales of resolution. The resulting data representation is intermediate between the space domain (with no frequency resolution) and the spatial frequency domain (with no spatial resolution). As a result, the wavelet decomposition provides a distinctive means of isolating noise from signal in CSEM data.

The wavelet decomposition generally represents noise with the detail coefficients and the smoothly-varying signal with the remaining approximation coefficients. Moreover, unlike the Fourier transform (which measures the relative amount of rapid versus slow variations for the entire signal), the wavelet decomposition recognizes rapid variations (detail coefficients) at each level of the decomposition. These levels correspond to progressively coarser views of the data. Thus, the wavelet decomposition of Fig. 5 can distinguish the sudden changes at either end of the data from the corners at about days 184.96 and 184.98 by capturing these features at different decomposition levels.

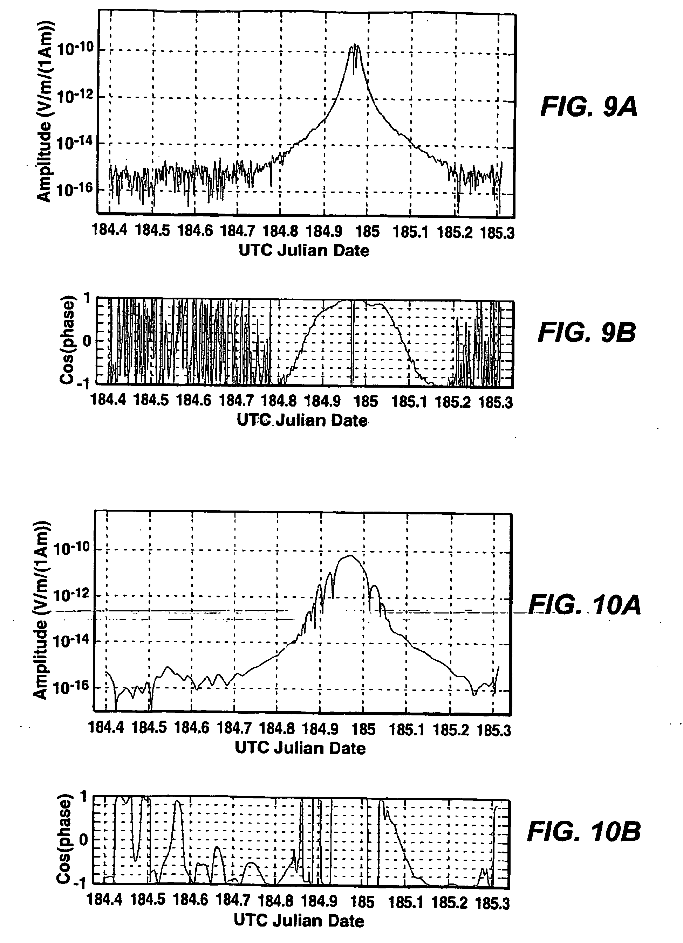

Having partitioned noise and signal into the detail and amplitude coefficients respectively, the wavelet denoising strategy of how to threshold the detail coefficients (step **74)** comes down to zeroing (or otherwise reducing) the detail coefficients prior to inverting the decomposition and composing the denoised signal. Thus, in Figs. 8I-K and 8M-O, the detail coefficients have been zeroed out while the approximation coefficients have been preserved (final approximation coefficients shown in Figs. 8L and 8P). Composing, i.e., reversing the decomposition of step **73** by performing the inverse wavelet transform, these new coefficients (step **75** of Fig. 7) leads to the denoised curves in Figs. 9A-B. Thus, the portion of Figs. 9A and 9B between Julian dates of 184.4 and 185.3 were generated by performing the inverse wavelet transform of the approximation coefficients of Figs 8L and 8P.

Before the reconstruction step **75** is performed, however, a second decomposition will be performed if the number of decomposition levels elected at step **72** was two or more. In this second decomposition, a wavelet transform is performed on the approximation coefficients from the first decomposition. After this second application of step **73,** the resulting detail coefficients are thresholded and accumulated with the thresholded detail coefficients from the first level of decomposition. In this manner, the method loops through steps **73** and **74** as many times as were selected at step **72** (loop not shown in Fig. 7). Then, the last set of approximation coefficients are combined with the accumulated detail coefficients and in step **75** are inverse wavelet transformed to generate a reconstructed signal with reduced noise. In the example illustrated by Figs. 8A-P, the threshold level for step **74** was set at zero, and therefore in step **75** the inverse wavelet transform was applied only to the third-level approximation coefficients.

Of course, if the decomposition is carried to too great a level, significant features of the signal will begin to appear among the detail coefficients. Figures 10A-B show the result of denoising the same original data from Fig. 5 using a six-level decomposition. Unlike the case in Figs. 9A-B however, the fourth, fifth and sixth decomposition levels have partitioned some of the smoothly-varying CSEM signal among the detail coefficients. Although these levels contain statistically-small features of the data, removing them completely has over-smoothed the curves in Figs. 10A-B and introduced noise on the signal. It is clear, particularly from the amplitude plot of Fig. 10A, that the decomposition level is too large and has categorized some components of the smoothly-varying CSEM signal as detail. Once lost during thresholding, the features represented by these components are lost from the denoised signal. Instead of allowing this to happen, the user of the present invention can recognize these important features of the signal among the detail coefficients at a lower decomposition level and preserve them when composing the denoised data.

In general, the choice of an appropriate decomposition level (initially at step **72**, and then revisited at step **76**) will be data-dependent, but a poor choice of level will manifest itself in obvious damage to the signal.

The wavelet transform (step **73**) of a function $f(t)$ is its convolution with a wavelet function, $\psi$ :

$$F(\lambda, t) = \int_{-\infty}^{+\infty} f(u) \frac{1}{\sqrt{\lambda}} \, \psi\left(\frac{u-t}{\lambda}\right) \, du \qquad (1)$$

(E. Foufoula-Georgiou and P. Kumar, Wavelets in Geophysics, in volume 4 of Wavelet Analysis and its Applications, Academic Press, 1994). Here, $\lambda$ is a scale parameter which sets the resolution of the continuous wavelet transform and corresponds to the decomposition level in the case of the discrete and fast wavelet transforms. In a discretization of this equation, the scale parameter is selected to change by powers of 2

$$\lambda = 2^J; \, j = 1,2,3,\ldots$$

so that j becomes the level of the discretized transform. The time variables, u and t, are discretized by a time unit, $\Delta$ :

$$u = m \, \Delta \, 2^J; t = n \, \Delta \, 2^J; (m, n) = 1,2,3,\ldots$$

As a result, in its discretized form, the convolution expressed by equation (1) can be written as a sequence of low-pass and high-pass digital filter operations, followed by a coarsening of the time unit to 2$\Delta$. The output of high-pass filtering and coarsening become the detail coefficients at that level and the output of low-pass filtering and coarsening become the approximation coefficients, which are optionally transformed by the same procedure to produce the wavelet coefficients corresponding to the next level. Fortran programs to implement this procedure and its inverse are given by W. H. Press, et al, Numerical Recipes in Fortran: the Art of Scientific Computing, Cambridge University Press, 2nd ed. (1992).

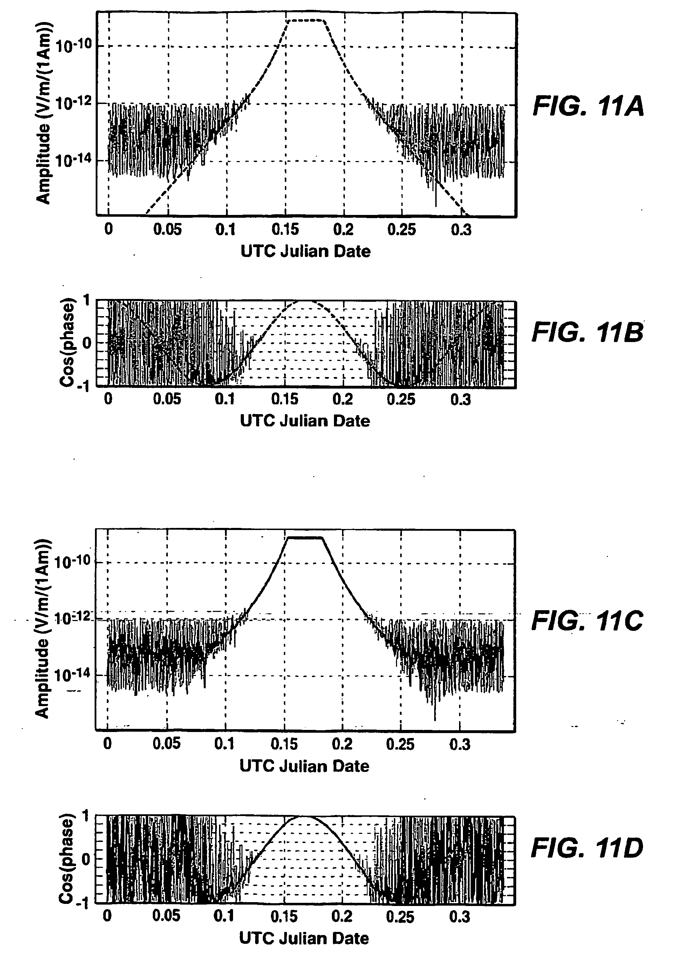

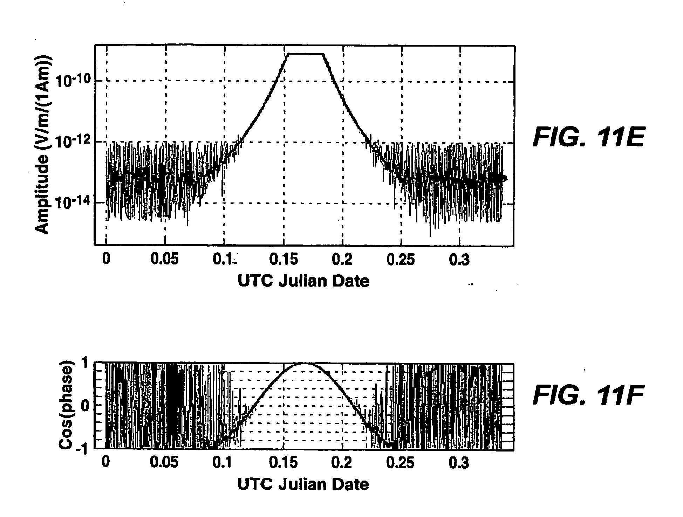

A wavelet is a pulse of finite duration where the pulse contains a limited range of frequency components. In contrast to the Fourier transform, which transforms back and forth between the time domain and the frequency domain, a wavelet transform moves into intermediate domains where functions are both partially localized in time and partially localized in frequency. There are many possible choices (step **71** of Fig. 7) of functions, $\psi$ that satisfy the wavelet requirements of compact support and zero mean. While some choices may give slightly better noise rejection than others, experience with CSEM data has shown that specific functions are either acceptable or unacceptable and that unacceptable wavelet functions manifest themselves in obvious damage to the signal. For example, Figs. 11A-B show synthetic CSEM data (black curves) together with the synthetic data plus additive noise (gray curves). This synthetic example was not produced by mathematically simulating a CSEM tow line over an earth resistivity model. Rather, it was created by superimposing simple mathematical curves and random noise to imitate the shape of an actual CSEM gather such as that shown in Figs. 5A-B.

Referring to Figs. 11C-D, compared to the noisy data (gray curves), the wavelet-denoised result (black curves) has recovered additional signal before the noise becomes so large at larger offsets that it overwhelms the synthetic data. The filtered data were denoised based on a 4-level decomposition using 4th-order symlets. Figs. 11E-F show the corresponding results for denoising using a 4-level decomposition based on the Haar wavelet. In contrast to the symlet results of Figs. 11C-D, the Haar wavelet is clearly unsuitable in this application, having introduced unwanted stair steps into what was a smoothly-varying signal.

Wavelets are typically categorized in families based on mathematical properties such as symmetry. Within a family, wavelets are further categorized by their order, which roughly corresponds to the number of vanishing moments. Wavelet orders of 5 or less are typically the most useful for CSEM noise suppression. Some wavelet families that are particularly useful for CSEM noise mitigation include (See I. Daubechies, "Ten Lectures on Wavelets," Society for Industrial and Applied Mathematics, Philadelphia, 1992):

- Daubechies, a compact wavelet with the highest number of vanishing moments;

- symlet, a modification of the Daubechies wavelets that is more symmetrical;

- biorthogonal, for which exact reconstruction is possible with finite impulse response filters; and,

- coiflet, for which both the high-pass and low-pass filters in the discrete transforms are as compact as possible.

In general, because of its blocky nature, the Haar wavelet is not very useful for reducing CSEM noise, as evidenced by Figs. 11E-F.

There are various strategies to carry out the thresholding step **74** of rejecting or reducing small values in the detail coefficients. See for example, D. L. Donoho, "De-noising by soft-thresholding," IEEE Transactions on Information Theory 41, 613- 627 (1995); D. L. Donoho, "Progress in wavelet analysis and WVD: a ten minute tour," Progress in Wavelet Analysis and Applications, 109-128, Y. Meyer and S. Roques, ed., Gif-sur-Yvette (1993); and J. Walker, A Primer on Wavelets and their Scientific Applications, Chapman & Hall/CRC (1999). All of these methods operate by rejecting (setting to zero) detail coefficients whose absolute value falls below some threshold, $\beta$, and retaining only those coefficients whose magnitude lies above that threshold. One threshold offered by Donoho (1993) is to set

$$\beta = \sigma \sqrt{2 \ \log \ N}$$

where $\sigma$ is the standard deviation of the detail coefficients and $N$ is the number of detail points at the particular decomposition level. For example, $N = 1200$ in Fig. 8A, and $N$ is about 600 in Fig. 8B and about 300 in Fig. 8C. It is even possible to apply different threshold criteria to the detail coefficients at different decomposition levels. In all of the examples herein, the criteria used effectively rejected all of the detail coefficients, leaving the denoised data to be constructed from the approximation coefficients alone. In different embodiments of the invention, it is possible to threshold the in-phase and out-of-phase components individually (as herein) or based on some combined property of their detail coefficients, such as the sum of the squared magnitudes of the real and imaginary parts.

Since wavelet de-noising of CSEM data, i.e., the present inventive method, is based on the way in which noises appear in those data, it is applicable to noise from various sources, such as magnetotelluric energy, lightning, oceanic currents, and fluctuations in source position.

The present invention exploits the combined spatial and spatial frequency characters of noise in CSEM surveys. That is, it is able to recognize that some data variations across bins can be attributed to resitivity structures within the earth while other variations containing high spatial frequencies cannot. These variations constitute a model of noise in CSEM surveys, and the invention mitigates noises that obey this model.

In a typical application of the invention, CSEM data representing a single temporal frequency are decomposed to a small number of levels (such as 4) by a discrete wavelet transform based on a low-order (3 or 4) symlet. The detail coefficients are then zeroed completely or zeroed except for statistically significant outliers and all of the approximation coefficients retained. The data are then reconstructed by reversing the wavelet decomposition. In preferred embodiments of the invention, real (in-phase) and imaginary (out-of-phase) components of the complex data values are treated independently.

To apply the method, including evaluating the impact of threshold levels and decomposition levels, the invention is most usefully implemented as computer software and used in conjunction with existing computer software (such as MATLAB to perform the wavelet transforms) to carry out the steps shown in Fig. 7. As with the other steps in Fig. 7, the invention could also be implemented in electronic hardware or in some combination of hardware and software.

In application, it may be found that, after testing parameters and evaluating the impact of the invention on CSEM data, the user may decide to discontinue use of the invention for data contained within a particular survey either because the data are not sufficiently noisy or because the noise is not of the type amenable to reduction by the present invention.

Skilled practitioners of geophysical data processing will recognize the importance of testing multiple noise mitigation techniques, testing them in combination, and observing the impact of their control parameters by examining the impact on their data. As stated above, techniques to perform discrete wavelet transforms and threshold data are published and commercially available in the form of computer programming systems and libraries. (See, for example, MATLAB, the Language of Technical Computing, 2001, The MathWorks, Inc. and SAS/IML User's Guide, Version 8, SAS Publishing, 1999.) As a result, the above description of the invention, together with the development or purchase of appropriate software, will enable a geophysical data processor to practice the invention after writing only a relatively small amount of code.

Optimal parameter choices for the wavelet decomposition and thresholding are data-dependent and, so, cannot be specified in advance of the data processing. In addition, it will obvious to those skilled in the art of geophysical data processing that the method can be applied to measurements of magnetic field components and to data generated by a transmitter that primarily introduces a magnetic field in the earth. (This is in contrast to the linear antenna depicted in Fig. 1, which primarily introduces an electric field in the earth. It is well known that any time-varying current will introduce both electric and magnetic fields in the earth and, furthermore, that linear antennae are primarily electric-field devices while loop-type antennae are primarily magnetic-field devices.) Both electric field and magnetic field source devices fall within the field of CSEM surveying.

The foregoing application is directed to particular embodiments of the present invention for the purpose of illustrating it. It will be apparent, however, to one skilled in the art, that many modifications and variations to the embodiments described herein are possible. For example, it will be apparent to one skilled in the art that not every step in Fig. 7 must be performed in the order shown. For instance, step **72,** where the number of decomposition levels is selected to be an integer of one or more, may be performed before step **71** or before step **75** or anywhere in between. All such modifications and variations are intended to be within the scope of the present invention, as defined in the appended claims.

## Claims

1.  A computer-implemented method for reducing high frequency, offset dependent noise mixed with a true signal in a signal recorded by a receiver in a controlled source electromagnetic survey of an offshore subterranean region, comprising:

    (a) selecting a wavelet function;
    (b) transforming said recorded signal with a wavelet transformation using said wavelet function, thereby generating a decomposed signal consisting of a high frequency component and a low frequency component;
    **characterised by** said wavelet function, satisfying conditions of compact support and zero mean, the method further comprising;
    (c) reducing the magnitude of the high frequency component where such magnitude exceeds a pre-selected threshold value, thereby completing a first level of decomposition; and
    (d) inverse transforming the low-frequency component plus the threshold-reduced high-frequency component, thereby reconstructing a noise-filtered signal.

2.  The method of claim 1, further comprising after step (c):

    (i) selecting the low-frequency component from the previous level of decomposition and transforming it with a wavelet transform into a high frequency component and a low frequency component;
    (ii) reducing the magnitude of the resulting high frequency component where such magnitude exceeds a pre-selected threshold value;
    (iii) accumulating the threshold-reduced high-frequency component from the previous step with the threshold-reduced high-frequency components from previous levels of decomposition; and
    (iv) repeating steps (i)-(iii) until a pre-selected level of decomposition has been performed, resulting in a final low-frequency component and a final high-frequency component consisting of the accumulated threshold-reduced high-frequency components from all levels of decomposition.

3. The method of claim 1, further comprising repeating steps (a) - (d) unless the reconstructed signal indicates signal damage.

4. The method of claim 3, further comprising repeating steps (a)-(d) until the reconstructed signal indicates either signal damage or no further noise reduction.

5. The method of claim 1, wherein said threshold is zero.

6. The method of claim 1, wherein said high frequency component magnitudes above the threshold are reduced to said threshold value.

7. The method of claim 1, wherein said wavelet function is selected from a group consisting of: a Daubechies wavelet; a symlet; a biorthogonal wavelet; and a coiflet.

8. The method of claim 1, wherein said threshold $\beta$ is set at $\beta = \sigma \sqrt{2 \ \log \ N}$, where $\sigma$ is the standard deviation of the high frequency components and N is the number of points in the high frequency component of the signal, said signal being expressed in discretized form.

9. The method of claim 1, wherein said wavelet transformation of signal $f(u)$ is expressed by a discretized version of

$$F(\lambda;t) = \int\limits_{-\infty}^{+\infty} f(u) \frac{1}{\sqrt{\lambda}} \ \psi\left(\frac{u-t}{\lambda}\right) du$$

where $\psi$ is the wavelet function, t is time, and $\lambda$ is a scale parameter related to resolution.

10. The method of claim 9, wherein the integral is performed using Mallat's fast wavelet transform technique.

11. A method for producing hydrocarbons from a subsurface region, comprising:

(a) performing a controlled-source electromagnetic survey of the subsurface region;
(b) obtaining processed data of the survey, wherein the processing included reducing high frequency, offset-dependent noise mixed with a true signal in a signal recorded by a survey receiver by steps a) to d) of the method of claim 1; and
(c) drilling at least one well into the subsurface region based in part on spatially varying resistivity determined from the processed electromagnetic data after reduction of high-frequency, offset-dependent noise; and
(d) producing hydrocarbons from the at least one well.

**Patentansprüche**

1. Computerimplementiertes Verfahren zur Reduktion von hochfrequentem offsetabhängigem Rauschen, das mit einem wahren Signal gemischt in einem Signal vorliegt, welches von einem Empfänger in einer elektromagnetischen Untersuchung mit kontrollierter Quelle einer unterirdischen Offshore-Region aufgezeichnet wurde, bei dem

(a) eine Wavelet-Funktion ausgewählt wird;
(b) das aufgezeichnete Signal mit einer Wavelet-Transformation unter Verwendung der Wavelet-Funktion transformiert wird, wodurch ein zerlegtes Signal erzeugt wird, das aus einer hochfrequenten Komponente und einer niederfrequenten Komponente besteht;
**dadurch gekennzeichnet, dass** die Wavelet-Funktion die Bedingungen erfüllt, dass sie einen kompakten Träger und einen Mittelwert von Null hat, wobei in dem Verfahren ferner
(c) die Größe der hochfrequenten Komponente reduziert wird, wo die Größe einen festgelegten Schwellenwert übersteigt, wodurch ein erstes Zerlegungsniveau erreicht wird, und
(d) die niederfrequente Komponente plus die schwellenwertreduzierte hochfrequente Komponente invers transformiert werden, wodurch ein rauschgefiltertes Signal rekonstruiert wird.

2. Verfahren nach Anspruch 1, bei dem ferner nach Schritt (c):

(i) die niederfrequente Komponente aus dem vorhergehenden Zerlegungsniveau ausgewählt wird und mit einer Wavelet-Transformation in eine hochfrequente Komponente und eine niederfrequente Komponente transformiert wird;
(ii) die Größe der resultierenden hochfrequenten Komponente reduziert wird, wo diese Größe einen festgelegten Schwellenwert überschreitet;
(iii) die schwellenwertreduzierte hochfrequente Komponente aus dem vorhergehenden Schritt mit den schwellenwertreduzierten hochfrequenten Komponenten aus früheren Zerlegungsniveaus akkumuliert wird, und
(iv) die Schritte (i) bis (iii) wiederholt werden, bis ein zuvor gewähltes Zerlegungsniveau erzielt worden ist, das zu einer endgültigen niederfrequenten Komponente und einer endgültigen hochfrequenten Komponente führt, die aus den akkumulierten schwellenwertreduzierten hochfrequenten Komponenten aller Zerlegungsniveaus besteht.

3. Verfahren nach Anspruch 1, bei dem ferner die Schritte

(a) bis (d) wiederholt werden, bis das rekonstruierte Signal Signalstörung zeigt.

4. Verfahren nach Anspruch 3, bei dem ferner die Schritte (a) bis (d) wiederholt werden, bis das rekonstruierte Signal entweder Signalstörung oder keine weitere Rauschreduktion zeigt.

5. Verfahren nach Anspruch 1, bei dem der Schwellenwert Null ist.

6. Verfahren nach Anspruch 1, bei dem die Größen der hochfrequenten Komponente oberhalb des Schwellenwerts auf den Schwellenwert reduziert werden.

7. Verfahren nach Anspruch 1, bei dem die Wavelet-Funktion ausgewählt ist aus der Gruppe bestehend aus: einem Daubechies-Wavelet, einem Symlet, einem biorthogonalen Wavelet und einem Coiflet.

8. Verfahren nach Anspruch 1, bei dem der Schwellenwert $\beta$ auf $\beta = \sigma \sqrt{2 \log N}$ gesetzt wird, wobei $\sigma$ die Standardabweichung der hochfrequenten Komponenten ist und N die Anzahl der Punkte in der hochfrequenten Komponente des Signals ist, wobei das Signal in diskretisierter Form ausgedrückt wird.

9. Verfahren nach Anspruch 1, bei dem die Wavelet-Transformation von Signal $f(u)$ durch eine diskreditierte Version von

$$F(\lambda,t) = \int\limits_{-\infty}^{+\infty} f(u) \frac{1}{\sqrt{\lambda}} \, \psi\left(\frac{u-t}{\lambda}\right) du$$

ausgedrückt wird, in der $\psi$ die Wavelet-Funktion ist, $t$ die Zeit ist, und $\lambda$ ein mit der Auflösung zusammenhängender Skalenparameter ist.

10. Verfahren nach Anspruch 9, bei dem das Integral unter Verwendung von Mallats schneller Wavelet-Transformationstechnik durchgeführt wird.

11. Verfahren zur Förderung von Kohlenwasserstoffen aus einer unterirdischen Region, bei dem

(a) eine elektromagnetische Untersuchung mit kontrollierter Quelle der unterirdischen Region durchgeführt wird;
(b) verarbeitete Daten der Untersuchung erhalten werden, wobei die Verarbeitung die Reduktion von hochfrequentem offsetabhängigem Rauschen einschließt, das mit einem wahren Signal gemischt in einem Signal vorliegt, welches von einem Messempfänger in den Schritten a) bis d) des Verfahrens gemäß Anspruch 1 aufgezeichnet wurde, und
(c) mindestens ein Bohrloch in die unterirdische Region gebohrt wird, und zwar teilweise auf Basis von räumlich variierendem spezifischen Widerstand, der aus den verarbeiteten elektromagnetischen Daten nach der Reduktion des hochfrequenten offsetabhängigen Rauschens bestimmt wurde, und
(d) aus dem mindestens einen Bohrloch Kohlenwasserstoffe gefördert werden.

**Revendications**

1. Procédé informatisé destiné à réduire le bruit à haute fréquence dépendant du déport mélangé à un signal vrai dans un signal enregistré par un récepteur lors d'un relevé électromagnétique à source contrôlée d'une région souterraine au large, comportant les étapes consistant à :

   (a) sélectionner une fonction d'ondelettes ;
   (b) transformer ledit signal enregistré par une transformation en ondelettes utilisant ladite fonction d'ondelettes, générant ainsi un signal décomposé constitué d'une composante à haute fréquence et d'une composante à basse fréquence;
   **caractérisé en ce que** ladite fonction d'ondelettes satisfait des conditions de support compact et de moyenne nulle, le procédé comportant en outre les étapes consistant à :
   (c) réduire l'amplitude de la composante à haute fréquence lorsque cette amplitude dépasse une valeur seuil présélectionnée, achevant ainsi un premier niveau de décomposition ; et
   (d) appliquer une transformation inverse à la composante à basse fréquence additionnée à la composante à haute fréquence réduite par seuillage, reconstituant ainsi un signal débruité par filtrage.

2. Procédé selon la revendication 1, comportant en outre après l'étape (c) les étapes consistant à :

   (i) sélectionner la composante à basse fréquence issue du précédent niveau de décomposition et la transformer par une transformée en ondelettes en une composante à haute fréquence et une composante à basse fréquence ;
   (ii) réduire l'amplitude de la composante à haute fréquence résultante lorsque cette amplitude dépasse une valeur seuil présélectionnée;
   (iii) cumuler la composante à haute fréquence réduite par seuillage issue de l'étape précédente avec les composantes à haute fréquence réduites par seuillage issues des précédents niveaux de décomposition ; et
   (iv) répéter les étapes (i) à (iii) jusqu'à ce qu'un niveau présélectionné de décomposition ait été effectué, ce qui se traduit par une composante finale à basse fréquence et une composante finale à haute fréquence constituée du cumul des composantes à haute fréquence réduites par seuillage issues de tous les niveaux de décomposition.

3. Procédé selon la revendication 1, comportant en outre la répétition des étapes (a) à (d) à moins que le signal reconstitué n'indique une détérioration du signal.

4. Procédé selon la revendication 3, comportant en outre la répétition des étapes (a) à (d) jusqu'à ce que le signal reconstitué indique soit une détérioration du signal, soit l'absence de réduction supplémentaire du bruit.

5. Procédé selon la revendication 1, ledit seuil étant nul.

6. Procédé selon la revendication 1, lesdites amplitudes des composantes à haute fréquence supérieures au seuil étant réduites à ladite valeur seuil.

7. Procédé selon la revendication 1, ladite fonction d'ondelettes étant sélectionnée dans un groupe constitué : d'une ondelette de Daubechies ; d'une symlet ; d'une ondelette bi-orthogonale ; et d'une coiflet.

8. Procédé selon la revendication 1, ledit seuil $\beta$ étant pris égal à $\beta = \sigma \sqrt{2 \log N}$, où $\sigma$ est l'écart-type des composantes à haute fréquences et N est le nombre de points de la composante à haute fréquence du signal, ledit signal étant exprimé sous forme discrétisée.

9. Procédé selon la revendication 1, ladite transformation en ondelettes du signal *f(u)* étant exprimée par une version discrétisée de

$$F(\lambda,t) = \int\limits_{-\infty}^{+\infty} f(u) \frac{1}{\sqrt{\lambda}} \psi \left( \frac{u-t}{\lambda} \right) du$$

où $\psi$ est la fonction d'ondelette, $t$ est le temps et $\lambda$ est un paramètre d'échelle lié à la résolution.

10. Procédé selon la revendication 9, l'intégration étant effectuée en utilisant la technique de transformée en ondelettes rapide de Mallat.

11. Procédé de production d'hydrocarbures à partir d'une région souterraine, comportant les étapes consistant à :

(a) effectuer un relevé électromagnétique à source contrôlée de la région souterraine ;
(b) obtenir des données traitées du relevé, le traitement comprenant une réduction du bruit à haute fréquence dépendant du déport mélangé à un signal vrai dans un signal enregistré par un récepteur de relevé par les étapes a) à d) du procédé selon la revendication 1 ;
(c) forer au moins un puits dans la région souterraine en se basant en partie sur une résistivité variant dans l'espace déterminée à partir des données électromagnétiques traitées après réduction du bruit à haute fréquence dépendant du déport ; et
(d) produire des hydrocarbures à partir du ou des puits.

**FIG. 1**
*(Prior Art)*

**FIG. 2A**
*(Prior Art)*

**FIG. 2B**
*(Prior Art)*

**FIG. 3A**
**(Prior Art)**

**FIG. 3B**
**(Prior Art)**

**FIG. 4**
**(Prior Art)**

**FIG. 5A**
**(Prior Art)**

**FIG. 5B**
**(Prior Art)**

**FIG. 6**

71 ── Select wavelet function

72 ── Select decomposition level

73 ── Perform discrete wavelet decomposition

74 ── Threshold detail coefficients

75 ── Reconstruct data from threshold wavelet coefficients

76 ── Noise rejected? Signal undamaged?          NO

YES

Finished

**FIG. 7**

FIG. 8A

FIG. 8E

FIG. 8B

FIG. 8F

FIG. 8C

FIG. 8G

FIG. 8D

FIG. 8H

FIG. 8I

FIG. 8M

FIG. 8J

FIG. 8N

FIG. 8K

FIG. 8O

FIG. 8L

FIG. 8P

*FIG. 9A*

*FIG. 9B*

*FIG. 10A*

*FIG. 10B*

*FIG. 11A*

*FIG. 11B*

*FIG. 11C*

*FIG. 11D*

*FIG. 11E*

*FIG. 11F*

**EP 1 922 567 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 70320305 P
- US 4617518 A, Srnka
- WO 2005010560 A
- US 0601555 W

- US 5619998 A, Abdel-Malek and Rigby
- US 6741739 B, Vincent
- US 5740036 A

**Non-patent literature cited in the description**

- **L. M. MacGregor et al.** The RAMESSES experiment -III. Controlled-source electromagnetic sounding of the Reykjanes Ridge at 57°45' N. *Geophys. J. Int.,* 1998, vol. 135, 773-789
- *Geophysics,* 1984, vol. 49, 934-948
- *Geophysics,* 1988, vol. 53, 1068-1079
- **B. K. Bhattacharyya.** Design of spatial filters and their application to high-resolution aeromagnetic data. *Geophysics,* 1972, vol. 37, 68-91
- **J. S. Walker.** A Primer on Wavelets and their Scientific Applications. Chapman & Hall/CRC, 1999
- **Leblanc ; Morris.** Denoising of aeromagnetic data via the wavelet transform. *Geophysics,* 2001, vol. 66, 1793-1804
- **Ridsdill-Smith ; Dentith.** The wavelet transform in aeromagnetic processing. *Geophysics,* 1999, vol. 64, 1003-1013
- The Application of the Wavelet Transform to the Processing of Aeromagnetic Data. **Ridsdill-Smith.** Ph. D. thesis. The University of Western Australia, 2000
- **J. C. Soares et al.** Efficient automatic denoising of gravity gradiometry data. *Geophysics,* 2004, vol. 69, 772-782
- **Zhang ; Ulrych.** Physical Wavelet Frame Denoising. *Geophysics,* 2003, vol. 68, 225-231

- **S. Mallat.** A theory for multiresolution signal decomposition: The wavelet representation. *IEEE Pattern Analysis and Machine Intelligence,* 1989, vol. 11, 674-693
- Wavelets in Geophysics. **E. Foufoula-Georgiou ; P. Kumar.** Wavelet Analysis and its Applications. Academic Press, 1994, vol. 4
- **W. H. Press et al.** Numerical Recipes in Fortran: the Art of Scientific Computing. Cambridge University Press, 1992
- **I. Daubechies.** Ten Lectures on Wavelets. Society for Industrial and Applied Mathematics, 1992
- **D. L. Donoho.** De-noising by soft-thresholding. *IEEE Transactions on Information Theory,* 1995, vol. 41, 613-627
- Progress in wavelet analysis and WVD: a ten minute tour. **D. L. Donoho.** Progress in Wavelet Analysis and Applications. 1993, 109-128
- **J. Walker.** A Primer on Wavelets and their Scientific Applications. Chapman & Hall/CRC, 1999
- MATLAB, the Language of Technical Computing. The MathWorks, Inc, 2001
- SAS/IML User's Guide. SAS Publishing, 1999, vol. 8